# EUROPEAN PATENT SPECIFICATION

(11) **EP 0 376 430 B1**
(45) Date of publication and mention of the grant of the patent: **23.06.1993**
(21) Application number: 89303512.1
(22) Date of filing: 10.04.1989
(51) Int. Cl.: E04G 7/30

(54) **Support system**
Stützvorrichtung
Système de support

(30) Priority: 28.12.1988 JP 331310/88
(43) Date of publication of application: 04.07.1990
(73) Proprietor: Ono, Tatsuo, Chiba (JP)
(72) Inventor: Ono, Tatsuo, Chiba (JP)
(74) Representative: Cook, Anthony John

(56) References cited:
- EP-A- 0 053 970
- EP-A- 0 212 051
- EP-A- 0 276 487
- WO-A-81/01164
- CH-A- 660 617
- DE-A- 3 345 645
- FR-A- 2 379 720

## Description

This invention relates to a support system and a method of connecting together columnar and connecting members to form a support system, such as temporary scaffolding, prefabricated scaffolding (e.g. a portable tower) or permanent scaffolding.

WO-81/01164 discloses a method of connecting together columnar members and connecting members, each columnar member including a plurality of longitudinally spaced apart flanges each having a circumferentially extending wall, and each connecting member including a main body, a plurality of joint shoes each at a respective end of the main body, a plurality of hooks each disposed in an open end of a housing of a respective one of the joint shoes and a plurality of wedges each extendable into aligned wedge insertion holes in a respective one of the housings and the associated hook; wherein the method comprises driving each wedge into its wedge insertion holes to alter the relative positions of the associated hook and housing and thereby bring the hook into engagement with a selected part of the inner surface of the wall of one of the flanges of one of the columnar members, whilst also bringing the open end of the housing into engagment with the outer surface of the columnar member. However, because the hooks are fixed to the main bodies of the connecting members and the joint shoes are slidable relative to the main bodies, any vertical load carried by a connecting member is transferred via a hook to a flange wall of a columnar member. This can damage the hook or flange wall. The joint shoe associated with the hook primarily only transfers horizontal forces because the joint shoe moves relative to the main body until the vertical force carried by the main body is transferred to the columnar member primarily by the hook.

Also, when not in use, the joint shoes are free to slide backwards and forwards. If a joint shoe is in its forward position, an operator must first slide it backwards in order to make it easier to hook the hook over a flange wall. This is inconvenient.

Thirdly, the movable part of the hook/joint shoe construction is positioned externally and, if knocked, is likely to impair the sliding of the joint shoe along the hook.

According to a first aspect of the present invention, the prior art method is characterized in that each hook is slidable relative to the associated housing and main body and is biased by a respective elastically deformable member to move from a retracted position to an advanced position, whereby driving the associated wedge into its wedge insertion holes causes the hook to move towards its retracted position.

According to a second aspect of the present invention, there is provided a support system comprising: a plurality of columnar members each including a plurality of longitudinally spaced apart flanges each having a circumferentially extending wall; and a plurality of connecting members each including a main body, a plurality of joint shoes each at a respective end of the main body, a plurality of hooks each disposed in an open end of a housing of a respective one of the joint shoes and a plurality of wedges each drivable into aligned wedge insertion holes in a respective one of the housings and the associated hook to alter the relative positions of the housing and hook, whereby the hook may be brought into engagement with a selected part of the inner surface of the wall of one of the flanges of one of the columnar members, and the open end of the housing may be brought into engagement with the outer surface of the columnar member; characterized in that each hook is slidable relative to the associated housing and main body and is biased by a respective elastically deformable member to move from a retracted position to an advanced position, whereby driving the associated wedge into its wedge insertion holes causes the hook to move towards its retracted position.

Because each hook is slidable relative to the associated housing and main body, it is primarily only capable of transferring horizontal loads to the flange wall of the columnar member. The main horizontal load transferred by the hook is the tensile force used to form a rigid frictional connection between the housing of the joint shoe and the columnar member. Any vertical load applied to the connecting member is transferred to the columnar member via the joint shoe and the rigid frictional connection. Thus, the hook and flange wall will not be damaged. The joint shoe and the part of the columnar member against which it abuts (e.g. an elongate main body of the columnar member) tend to be far stronger than the hook and flange wall and thus are less likely to be damaged.

A second benefit is that the elastically deformable member ensures that, when not in use, the hook is in its advanced position and therefore can be easily hooked over the flange wall without first of all requiring the operator to spend time checking and if necessary adjusting the hook position to permit easy assembly.

Thirdly, because the movable part of the hook/joint shoe construction is positioned internally, the movable part (the hook) is to a large extent shielded by the non-movable part (the joint shoe) from receiving accidental knocks and thus the quality of the sliding action of the two components is less likely to be impaired than with the prior art arrangement.

The invention will now be described by way of non-limiting embodiments with reference to the accompanying drawings, in which:-
FIGURE 1 is a perspective view, with a portion broken away, of part of a support system according to one embodiment of this invention;
FIGURE 2 is a fragmentary enlarged sectional view of part of FIGURE 1;
FIGURE 3 is an exploded perspective view of an end portion of a connecting member of FIGURE 1;
FIGURES 4, 5, 6 and 7 are fragmentary enlarged sectional views showing alternatives to a flange of FIGURE 1;
FIGURE 8 is a fragmentary sectional view of a protective cover suitable for use with the support system of FIGURE 1;
FIGURE 9 is a fragmentary enlarged sectional view, similar to FIGURE 2, of part of a support system according to another embodiment of the invention;
FIGURE 10 is a fragmentary plan view illustrating a modification for a flange of FIGURE 9;
FIGURE 11 is a fragmentary enlarged sectional view, similar to FIGURE 2, of part of a support system according to another embodiment of the invention, in which a diagonal member is connected to the joint shoe;
FIGURES 12, 13 and 14 are fragmentary enlarged sectional views of parts of support systems according to further embodiments of the invention;
FIGURE 15 is a front view of a support system according to one embodiment of the invention, when formed into prefabricated scaffolding; and
FIGURE 16 is a front view of a support system according to one embodiment of the invention, when formed into a panel support for timbering, constructed by use of the support system according to the invention.

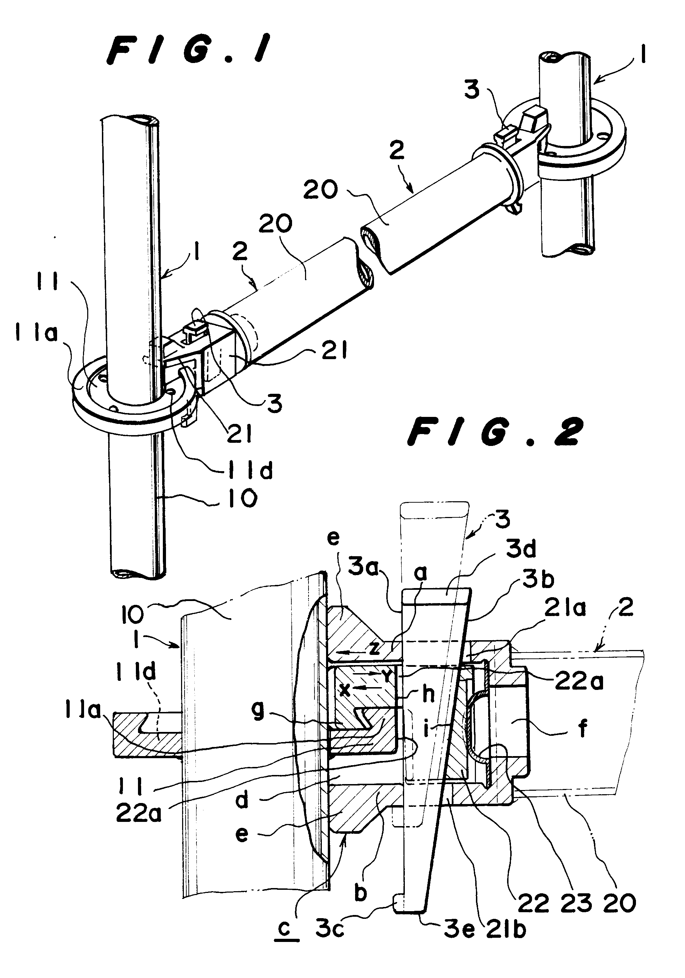

As shown in FIGURE 1, a support system according to this invention comprises columnar members 1, made to serve as longitudinal members, and connecting members 2 made to serve as transverse members or diagonal members. The columnar members 1 and connecting members 2 are connected together by wedges 3 to construct temporary scaffolding, e.g. in the form of a pillar, a tower or the like.

The columnar member 1 has a tubular main body 10 and a plurality of annular flanges 11 provided on the outer peripheral surface of the main body 10.

A jack, not shown, is connected to the lower end of the tubular main body 10 and is erected on the ground or the like, whereby the main body 10 is adjusted to a predetermined height.

A second tubular main body 10 is connected to the upper end of the above-mentioned main body 10, whereby the columnar member 1 is extended upwards to serve as the longitudinal member.

An auxiliary body may be connected to the upper end of the uppermost tubular main body 10. The auxiliary body is also provided with a flange the same as the annular flange 11.

The length and diameter of the tubular main body are set according to the intended use of the support system.

In connecting the tubular main bodies 10 to each other, appropriate connecting means (not shown) are used.

The tubular main body 10 has a circular cross-section in the embodiment shown, but may instead have a polygonal cross-section.

The flanges 11 are arranged on the outer peripheral surface of the tubular main body 10 at appropriate intervals along the axial direction of the main body 10, and are fixed to the outer peripheral surface by welding or the like, as shown in FIGURE 2.

The flanges each have a predetermined radial width.

Each flange 11 has a circumferential wall 11a around its outer periphery and drain holes 11d bored through a horizontal portion thereof. The wall 11a serves as an engaging portion of the flange 11.

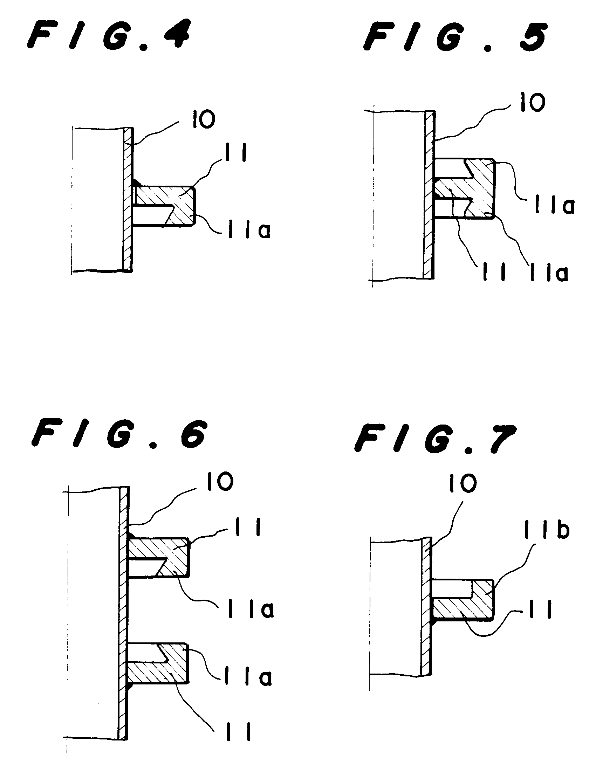

The wall 11a extends upwards in the embodiment shown, but may extend downwards, as shown in FIGURE 4.

The flange 11 may be T-shaped or somewhat T-shaped in section by providing two walls 11a, as shown in FIGURE 5.

The flange 11 may have a so-called double structure, as shown in FIGURE 6, in which the walls 11a face one another across a gap.

As shown in FIGURE 7, the flange 11 may have a constant thickness wall 11b instead of an undercut wall 11a.

The connecting member 2 comprises a tubular main body 20 and joint shoes 21 fixed to both ends of the main body 20, with a hook 22 slidably fitted in each of the joint shoes 21.

The length of the tubular main body 20 is set according to the intended use of the support system.

The tubular main body 20 may have a fixed length or may be adjustable.

The length of the tubular main body 20 when the connecting member 2 is used as a transverse member may be different from the length of the main body 20 when the connecting member 2 is used as a diagonal member.

Though the tubular main body 20 has a circular section in the embodiment shown, it may have a polygonal section.

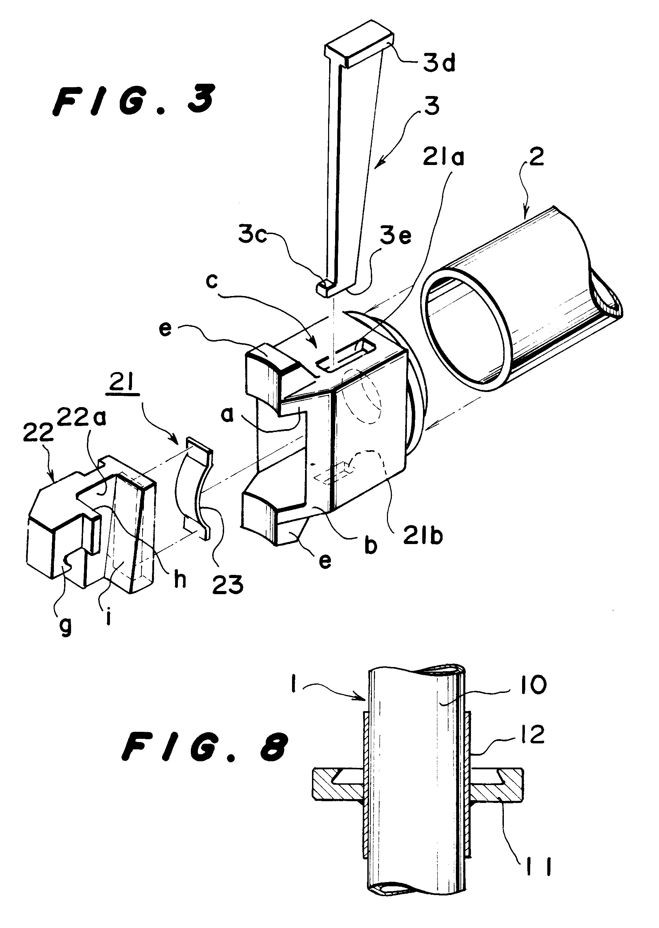

As shown in FIGURES 2 and 3, the joint shoe 21 has a shape resembling a bird's hill, and the hook 22 is slidably fitted in the interior, or a central portion, of the joint shoe 21.

The joint shoe 21 comprises a housing c having a pair of opposed top and bottom wall bodies a, b and the hook 22 slidably fitted in a hollow portion d of the housing c so as to be freely movable in the directions of arrows x and y.

Thick reinforcing portions e, e are provided near the front ends of the housing c, and a hole f for mounting a brace is bored in a substantially central portion of the rear end of the housing c.

The joint shoe 21 has wedge insertion holes 21a, 21b.

The hook 22 has at a tip portion thereof a hook-shaped catch portion g for disengageably engaging with the wall 11a of the flange 11.

The hook 22 also has at a rear end portion thereof a wedge insertion hole 22a, which comprises a perpendicular surface h and a taper surface i and is set in register with the wedge insertion hole 21a of the joint shoe 21.

The hook 22 is biased in a forward direction (the direction x in FIGURE 2) by an elastic member 23 such as a leaf spring, a coil spring, a rubber block, etc.

The wedge 3 is formed so as to be inserted in or through the wedge insertion holes 21a, 21b and 22b. In this embodiment, the wedge 3 has tapering side edges 3a, 3b.

The wedge 3 has a stopper portion 3c having an upper edge orthogonal to the lower end of the side edge 3a.

In addition, the wedge 3 has a flange portion 3d at its upper end. The flange portion 3d is so formed that it is possible to drive in or draw out the wedge 3 by striking the flange portion 3d with an appropriate tool such as a hammer.

When the wedge 3 is driven into the wedge insertion holes 21a, 21b, the side edge 3a of the wedge is brought into contact with the aperture edges of the wedge insertion holes 21a, 21b. The side edge 3b of the wedge is brought into contact with the taper surface i of the wedge insertion hole 22a of the hook 22.

Therefore, the hook 22 is drawn into the housing of the joint shoe 21, in the direction of arrow y in FIGURE 2, and is brought into contact with the wall 11a of the flange 11 against the force of the elastic member 23. At the same time, the housing c is moved in the direction of arrow z and the tips of the housing c are brought into contact with the outer periphery of the tubular main body 10 the columnar member 1.

Vertical loads applied to the connecting member 2 are transferred to the tubular main body 10 through the tips of the housing c. Thus, the flange 11 is not overstressed, and the connecting member 2 remains stable and well-balanced.

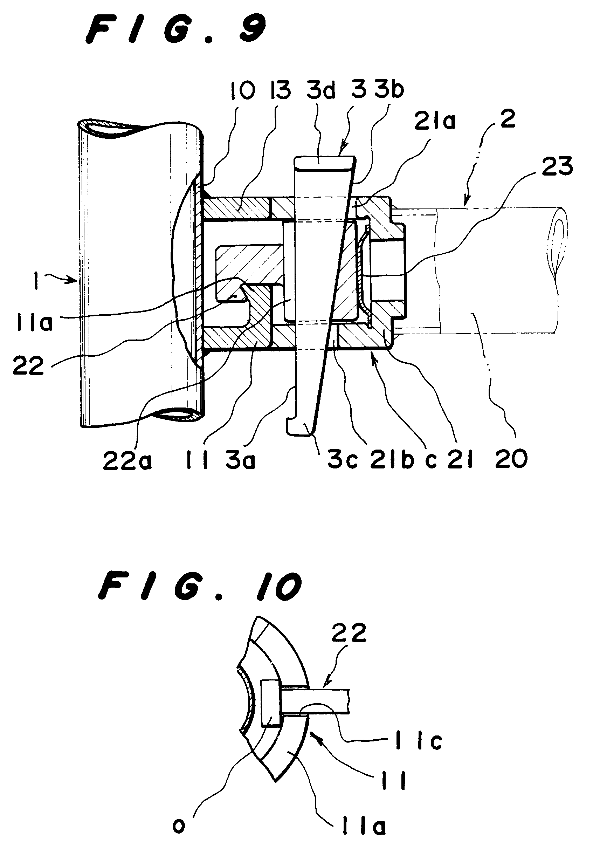

When the tip portions of the housing c of the joint shoe 21 are brought into contact with the outer peripheral surface of the tubular main body 10, the outer peripheral surface may undergo so-called marring. It is possible to prevent marring by fixing a protective cover 12 around the outer peripheral surface of the tubular main body 10, as shown in FIGURE 8.

The protective cover 12 may have a hollow cylindrical shape with a flange 11 fixed integrally on its outer periphery, as shown in FIGURE 8, and may be fixed to the outer periphery of the tubular main body 10 by welding or the like. Alternatively, the protective cover 12 may be fixed to the outer periphery of the tubular main body 10 by welding or the like, followed by fixing the flange 11 to the outer periphery of the protective cover 12.

When using the support system described above to form, for example, prefabricated scaffolding, a plurality of the columnar members are erected at appropriate intervals and connected together by a plurality of the connecting members 2 by driving in the wedges 3.

Since each wall 11a is annular, all 360° of each flange 11 may be used for connecting the connecting members 2 to the columnar member 1.

To disconnect the columnar members 1 and the connecting members 2, the wedges 3 are drawn upwards in the joint shoes 21. For example, a lower end portion 3e of the wedge 3 may be struck upwards with a hammer or the like. The biasing force produced by the elastic member 23 assists in raising the wedge 3. The stopper portion 3c at the bottom of the wedge 3 prevents the wedge 3 from being completely withdrawn from the joint shoe 21. This prevents the wedge 3 from being lost.

FIGURE 9 illustrates a second embodiment.

In this embodiment, the columnar member 1 is different from that of the first embodiment, and the connecting member 2 is correspondingly different as well.

In the second embodiment, the columnar member 1 has flanges 11 and spacers 13 fixed on the outer peripheral surface of a tubular main body 10. The spacers 13 extend to the same radial extent as the flanges 11.

The tips of a joint shoe 21 provided on the connecting member 2 are brought into contact with the outer peripheral edges of the flange 11 and the spacer 13.

In other words, the tips of the housing c of the joint shoe 21 are not brought into contact with the outer periphery of the tubular main body 10 but are brought into contact with the outer peripheral surface of the spacer 13 and the outer peripheral surface of the flange 11. Otherwise, the construction and operation of the second embodiment are the same as for the first embodiment of FIGURE 2.

The gap between the upper end of the wall 11a and the spacer 13 is made big enough to permit insertion of the hook 22.

Because the tip of the hook 22 protrudes outwards beyond the tips of the joint shoe 21, the design of the second embodiment permits easy insertion of the hook 22 through the gap between the wall 11a and the spacer 13.

The wall 11a is shielded by the spacer 13 and is therefore less likely to be covered with mortar when not being used.

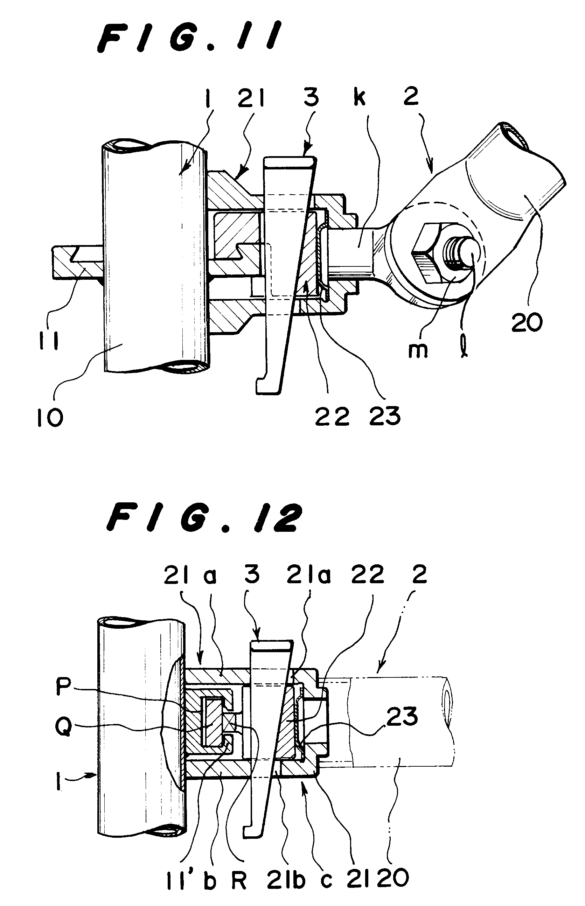

FIGURE 10 shows a modification of the flange 11 and the hook 22. The flange 11 has a plurality of circumferentially spaced cutouts 11c in the wall 11a and the hook 22 has a T-shaped tip portion o which may be inserted into one of the cutouts 11c and brought into engagement with the inner surface of the wall 11a.

The tip portion o may be inserted into the cutout 11c from above or may be inserted radially and then rotated by using a rotatable joint.

With this modification, the positions of engagement between the connecting member 2 and the columnar member 1 are determined by the cutouts 11c, but there is the merit of an extremely strong connection of the hook 22 to the wall 11a.

FIGURE 11 shows a further embodiment of the connecting member. A joint k is fixed in a hole f bored in a housing c constituting the joint shoe 21, and a tubular main body 20 as a diagonal member is rotatably fitted to the joint k by a bolt l and nut m. The diagonal member may be used for diagonally reinforcing a frame.

FIGURE 12 shows a still further embodiment of part of a support system in accordance with the invention.

In this embodiment, a pair of integral flanges 11' define a circumferentially extending dovetail groove P. A tip portion Q of the hook is removably insertable in the dovetail groove P. The tip portion Q is mounted on a rotatable joint R. Otherwise, the construction is the same as in FIGURE 2.

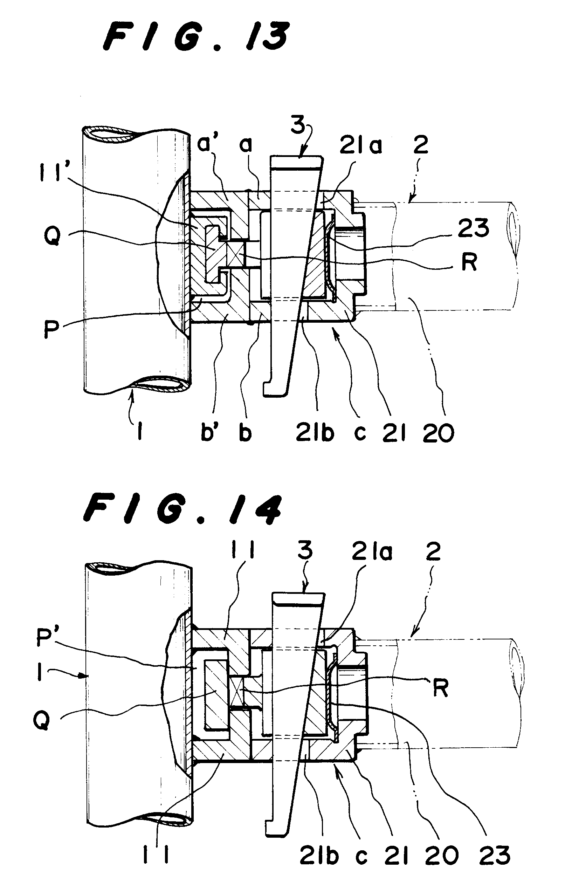

FIGURE 13 shows a modification of the embodiment illustrated in FIGURE 12. In this modification, wall bodies a', b' are joined to the wall bodies a, b of the joint shoe 21.

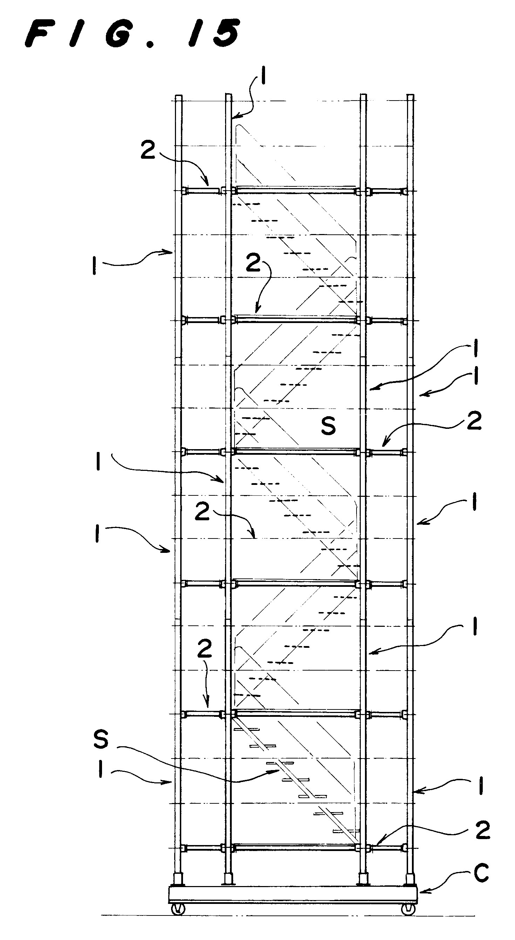

FIGURE 14 shows an embodiment in which a pair of separate upper and lower flanges 11, 11 face each other and define therebetween a dovetail groove P'. A tip portion Q fits into the dovetail groove P'.

FIGURE 15 shows an embodiment of the support system when used to form prefabricated scaffolding. The prefabricated scaffolding comprises columnar members 1 connected together to form a plurality of columns. The columns are connected together by a plurality of long and short connecting members 2.

If required, auxiliary bodies having extra flanges may be connected to the columnar members 1.

The lowermost columnar members 1 are mounted on a carrier truck C, and ladders S are attached to some of the connecting members 2.

Connection of the columnar members 1, connecting members 2 and ladders S to each other is carried out by use of the wedges 3 (not shown in FIGURE 15).

It is easy to form towers of differing heights and widths.

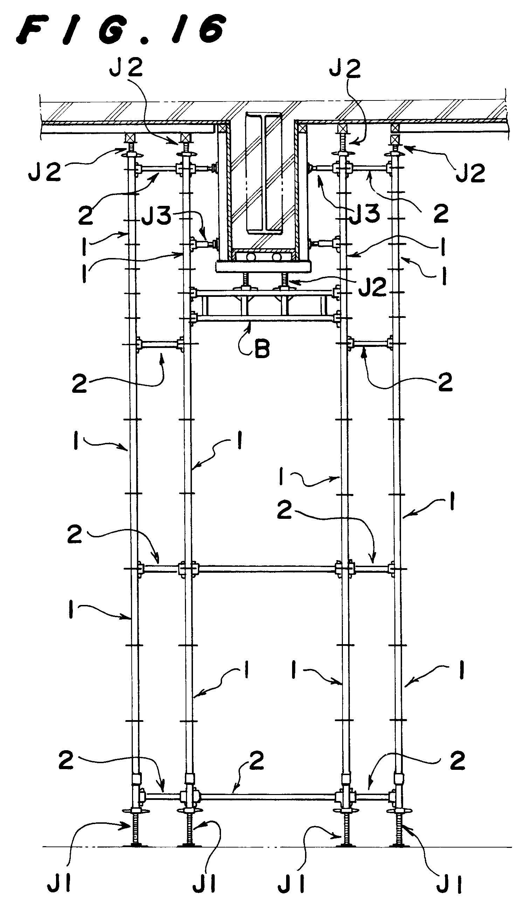

FIGURE 16 shows an embodiment of the support system when used to form a panel support for timbering. Columnar members 1 are connected together to form a plurality of columns which are themselves connected together by long and short connecting members 2.

Jacks J1 are provided at the lower ends of the lowermost columnar members 1, and expansion adjustors 32 are provided at the upper ends of the uppermost columnar members 1.

Also, the assembled system as a whole is provided with a mold adjustor J3 and a prefabricated beam B.

Connection of the columnar members 1 to the connecting members 2 and the prefabricated beam B is carried out by use of the wedges 3 (not shown in FIGURE 16).

The construction of the panel support may easily be varied to support the timbering for a wide range of concrete products.

The scaffolding of FIGURES 15 and 16 is temporary scaffolding for a construction site, but the present invention may instead provide temporary scaffolding for use in a shipbuilding site.

Apart from temporary scaffolding such as prefabricated scaffolding or a panel support, the present invention may also be used to provide a relatively long-lasting structure such as a truss-type pillar, tower, etc.

## Claims

1. A method of connecting together columnar members (1) and connecting members (2), each columnar member (1) including a plurality of longitudinally spaced apart flanges (11) each having a circumferentially extending wall (11a), and each connecting member (2) including a main body (20), a plurality of joint shoes (21) each at a respective end of the main body (20), a plurality of hooks (22) each disposed in an open end (e) of a housing (c) of a respective one of the joint shoes (21) and a plurality of wedges (3) each extendable into aligned wedge insertion holes (21a, 21b, 22a) in a respective one of the housings (c) and the associated hook (22);
wherein the method comprises driving each wedge (3) into its wedge insertion holes (21a, 21b, 22a) to alter the relative positions of the associated hook (22) and housing (c) and thereby bring the hook (22) into engagement with a selected part of the inner surface of the wall (11a) of one of the flanges (11) of one of the columnar members, whilst also bringing the open end (e) of the housing (c) into engagement with the outer surface of the columnar member (1);
characterized in that each hook (22) is slidable relative to the associated housing (c) and main body (20) and is biased by a respective elastically deformable member (23) to move from a retracted position to an advanced position, whereby driving the associated wedge (3) into its wedge insertion holes (21a, 21b, 22a) causes the hook (22) to move towards its retracted position.

2. A support system comprising:
a plurality of columnar members (1) each including a plurality of longitudinally spaced apart flanges (11) each having a circumferentially extending wall (11a); and
a plurality of connecting members (2) each including a main body (20), a plurality of joint shoes (21) each at a respective end of the main body (20), a plurality of hooks (22) each disposed in an open end (e) of a housing (c) of a respective one of the joint shoes (21) and a plurality of wedges (3) each drivable into aligned wedge insertion holes (21a, 21b, 22a) in a respective one of the housings (c) and the associated hook (22) to alter the relative positions of the housing (c) and hook (22), whereby the hook (22) may be brought into engagement with a selected part of the inner surface of the wall (11a) of one of the flanges (11) of one of the columnar members, and the open end (e) of the housing (c) may be brought into engagement with the outer surface of the columnar member (1);
characterized in that each hook (22) is slidable relative to the associated housing (c) and main body (20) and is biased by a respective elastically deformable member (23) to move from a retracted position to an advanced position, whereby driving the associated wedge (3) into its wedge insertion holes (21a, 21b, 22a) causes the hook (22) to move towards its retracted position.

3. A support system according to claim 2, wherein the open end (e) of each housing (c) comprises a pair of opposed wall bodies (a, b) defining a hollow (d) therebetween and having the wedge insertion holes (21a, 21b) of the housing formed therein.

4. A support system according to claim 2 or 3, wherein each flange (11), including its wall (11a, 11b), has a generally T- or L-shaped cross-section.

5. A support system according to any one of claims 2 to 4, wherein each hook (22) has a tip portion (g, o, Q) with a generally T- or L-shaped cross-section.

6. A support system according to any one of claims 2 to 5, wherein each wall (11a) has a plurality of cutouts (11c) spaced along its length, and each hook (22) has a tip portion (o) insertable into any cutout (11c) to engage the inner surface of the wall (11a) containing the cutout (11c).

7. A support system according to any one of claims 2 to 6, wherein each columnar member (1) further comprises an elongate main body (10) which is covered by a protective cover (12) adjacent to each flange (11) of the columnar member, thereby to protect the main body (10) when one of the housings (c) of the connecting members (2) comes into engagement with the columnar member (1).

8. A support system according to claim 7, wherein the protective covers (12) are cylindrical and are fixed to the outer peripheral surfaces of the main bodies (10), and the flanges (11) are fixed to the outer peripheral surfaces of the protective covers (12).

9. A support system according to claim 2 or 3, wherein each columnar member (1) further comprises (i) an elongate main body (10) on which are mounted the flanges (11) and (ii) a plurality of spacers (13) mounted on the main body (10) adjacent to the flanges (11), whereby when the columnar and connecting members (1, 2) are connected together the open ends (e) of the housings (c) engage with outer surfaces of the spacers (13) and flanges (11).

10. A support system according to claim 2 or 3, wherein the flanges (11, 11') are grouped in pairs, with the walls (11a) of each pair facing each other to define therebetween a dovetail groove (P, P'), whereby any hook (22) is engageable with one or both of the inner surfaces of the walls (11a) by being inserted into the dovetail groove (P, P'), rotated and then retracted.

11. A support system according to claim 10, wherein the flanges (11') of each pair of flanges are integral.

12. A support system according to claim 10, wherein the flanges (11) of each pair of flanges are separate.

13. A support system according to any one of claims 10 to 12, wherein each hook (22) has a tip portion (Q) on a rotatable joint (R), the tip portion (Q) having a generally T- or L-shaped cross-section.

14. A support system according to any one of claims 2 to 13, wherein each wedge (3) has a stopper portion (3c) at the narrower end thereof for stopping the wedge from being retracted out of the wedge insertion holes (21a, 21b, 22a).

15. A support system according to any one of claims 2 to 14, wherein the columnar and connecting members (1, 2) are connected together, with the connecting members (2) arranged horizontally or diagonally and the columnar members (1) arranged vertically.

16. A support system according to any one of claims 2 to 14, wherein the columnar and connecting members (1, 2) are connected together to form a prefabricated scaffolding system.

## Patentansprüche

1. Verfahren zum Verbinden von säulenartigen Elementen (1) mit Verbindungselementen (2), wobei jedes säulenartige Element (1) mehrere in Längsrichtung voneinander entfernte Flansche (11) aufweist, von denen jeder eine sich in Umfangsrichtung erstreckende Wandung (11a) hat, und jedes Verbindungselement (2) ein Hauptteil (20) und mehrere Verbindungsschuhe (21) jeweils an den Enden des Hauptteiles (20) und mehrere Haken (22) einschließt, von denen jeder in einem freien Ende (e) eines Gehäuses (c) einer der entsprechenden Verbindungsschuhe (21) angebracht ist, mehrere Keile (3) aufweist, von denen jeder in jeweils zueinander ausgerichtete Keilaufnahmelöcher (21a, 21b, 22a) eines der Gehäuse (c) und des dazugehörigen Hakens (22) verlängerbar ist,
wobei das Verfahren die Schritte aufweist, jeden Keil (3) in seine Keilaufnahmelöcher (21a, 21b, 22a) zu treiben, um die relativen Positionen des zugehörigen Hakens (22) und Gehäuses (c) zu verändern und damit den Haken (22) in einen ausgewählten Teil der inneren Oberfläche der Wandung (11a) eines der Flansche (11) der säulenartigen Bauelemente in Eingriff zu bringen, wobei gleichzeitig auch das freie Ende (e) des Gehäuses (c) mit der äußeren Oberfläche des säulenartigen Bauelements in Eingriff gebracht wird;
dadurch gekennzeichnet, daß jeder Haken (22) relativ zu dem zugehörigen Gehäuse (c) und Hauptteil (20) gleitbar ist und vorgespannt wird durch ein entsprechendes elastisch verformbares Bauelement (23), um sich von einer zurückgezogenen Stellung zu einer vorgeschobenen Position zu bewegen, wobei das Eintreiben des entsprechenden Keils (3) in seine Keilaufnahmelöcher (21a, 21b, 22a) bewirkt, daß der Haken (22) sich in seine zurückgezogene Position bewegt.

2. Stützvorrichtung mit:
mehreren säulenartigen Elementen (1), von denen jedes mehrere in Längsrichtung voneinander beabstandete Flansche (11) aufweist, die jeweils eine in Umfangsrichtung verlaufende Wandung (11a) haben, und mit mehreren verbindenden Elementen (2), von denen jedes ein Hauptteil (20), mehrere
Verbindungsschuhe (21), jeweils an einem entsprechenden Ende des Hauptteiles (20), mehrere Haken (22), von denen jeder in einem freien Ende (e) eines Gehäuses (c) eines der entsprechenden Verbindungsschuhe (21) angeordnet ist, und mehrere Keile (3) aufweist, wobei jeder Keil in jeweils zueinander ausgerichtete Keilaufnahmelöcher (21a, 21b, 22a) eines entsprechenden Gehäuses (c) und des dazugehörigen Hakens (22) getrieben werden kann, um die relativen Positionen des Gehäuses (c) und des Hakens (22) zu verändern, wobei der Haken (22) mit einem ausgewählten Teil der inneren Oberfläche der Wandung (11a) eines der Flansche (11) eines der säulenartigen Bauelemente in Eingriff gebracht werden kann und das freie Ende (e) des Gehäuses (c) die äußere Oberfläche des säulenartigen Bauelements (1) berühren kann;
dadurch gekennzeichnet, daß jeder Haken (22) relativ zu dem entsprechenden Gehäuse (c) und Hauptteil (20) gleitbar ist und vorgespannt ist durch ein elastisch verformbares Bauelement (23), um sich von einer zurückgezogenen Stellung zu einer vorgeschobenen Position zu bewegen, wobei das Eintreiben des entsprechenden Keils (3) in seine Keilaufnahmelöcher (21a, 21b, 22a) bewirkt, daß der Haken (22) sich in Richtung seiner zurückgezogenen Position bewegt.

3. Stützvorrichtung nach Anspruch 2, bei der das freie Ende (e) jedes Gehäuses (c) ein Paar sich einander gegenüberliegender Wandteile (a, b) aufweist, die zwischen sich einen Hohlraum (d) definieren und die darin gebildeten Keilaufnahmelöcher (21a, 21b) des Gehäuses haben.

4. Stützvorrichtung nach Anspruch 2 oder 3, bei der jeder Flansch (11), einschließlich seiner Wandung (11a, 11b), einen in etwa T- oder L-förmigen Querschnitt hat.

5. Stützvorrichtung nach einem der Ansprüche 2 bis 4, bei der jeder Haken (22) ein Endteil (g, o, Q) mit einem in etwa T- oder L-förmigen Querschnitt aufweist.

6. Stützvorrichtung nach einem der Ansprüche 2 bis 5, bei der jede Wandung (11a) mehrere Aussparungen (11c) hat, die entlang ihrer Länge beabstandet sind, und jeder Haken (22) ein in jedwede Aussparung (11c) einsetzbares Endteil (o) aufweist, um an der Innerfläche der Wandung (11a), die die Aussparung (11c) aufweist, anzugreifen.

7. Stützvorrichtung nach einem der Ansprüche 2 bis 6, bei der jedes säulenartige Bauelement (1) weiterhin einen länglichen Hauptteil (10) aufweist, welcher von einer je einem Flansch (11) des säulenartigen Elements benachbarten Schutzhülle (12) bedeckt ist, um so den Hauptteil (10) zu schützen, wenn eines der Gehäuse (c) der verbindenden Bauelemente (2) mit dem säulenartigen Element (1) in Eingriff kommt.

8. Stützvorrichtung nach Anspruch 7, bei der die Schutzhüllen (12) zylindrisch sind und an den äußeren Oberflächen der Hauptteile (10) befestigt sind und die Flansche (11) an den äußeren Umfangsoberflächen der Schutzhüllen (12) befestigt sind.

9. Stützvorrichtung nach Anspruch 2 oder 3, bei der jedes säulenartige Element (1) weiterhin aufweist: i.) einen länglichen Hauptteil (10), an dem die Flansche (11) montiert sind und ii.) mehrere Abstandshalter (13), die benachbart zu den Flanschen (11) an dem Hauptteil (10) montiert sind, so daß, wenn die säulenartigen Elemente (1, 2) und die Verbindungsteile miteinander verbunden werden, die freien Enden (e) der Gehäuse (c) mit den äußeren Oberflächen der Abstandshalter (13) und Flansche (11) in Eingriff treten.

10. Stützvorrichtung nach Anspruch 2 oder 3, bei der die Flansche (11, 11') paarweise gruppiert sind, wobei die Wandungen (11a) jeden Paares einander zugewandt sind und so zwischen sich eine Schwalbenschwanznut (P,P') bilden, wobei jeder Haken (22) in eine oder beide der inneren Berührungsflächen der Wandungen (11a) eingreifen kann, indem er in die Schwalbenschwanznut (P,P') eingeführt, gedreht und zurückgezogen wird.

11. Stützvorrichtung nach Anspruch 10, bei der die Flansche (11') eines jeden Flanschpaares aus einem Stück sind.

12. Stützvorrichtung nach Anspruch 10, bei der die Flansche (11) eines jeden Paares getrennt sind.

13. Stützvorrichtung nach einem der Ansprüche 10 bis 12, bei der jeder Haken (22) ein Endstück (Q) an einem Drehgelenk (R) hat, wobei das Endstück (Q) einen in etwa T- oder L-förmigen Querschnitt hat.

14. Stützvorrichtung nach einem der Ansprüche 2 bis 13, bei der jeder Keil (3) einen Stoppteil (3c) an seinem schmaleren Ende hat, um zu verhindern, daß der Keil aus den Keilaufnahmelöchern (21a, 21b, 22a) herausgezogen wird.

15. Stützvorrichtung nach einem der Ansprüche 2 bis 14, bei der die säulenartigen Elemente und die Verbindungsteile (1, 2) miteinander verbunden sind, wobei die Verbindungsteile (2) horizontal oder diagonal angebracht sind und die säulenartigen Bauelemente (1) vertikal angebracht sind.

16. Stützvorrichtung nach einem der Ansprüche 2 bis 14, bei der die säulenartigen und Verbindungsteile (1, 2) so miteinander verbunden sind, daß sie ein vorgefertigtes Gerüstsystem bilden.

## Revendications

1. Procédé pour relier des éléments en forme de colonne (1) et des éléments de raccord (2), chaque élément en colonne (1) comprenant une pluralité de collerettes (11) espacées longitudinalement ayant chacune une paroi (11a) s'étendant circonférentiellement, et chaque élément de raccord (2) comprenant un corps principal (20), une pluralité de sabots de jonction (21), chacun à une extrémité respective du corps principal (20), une pluralité de crochets (22), chacun disposé dans une extrémité ouverte (e) d'un logement (c) d'un sabot de jonction (21) respectif et une pluralité de coins (3) pouvant s'étendre chacun dans les trous (21a, 21b, 22a) d'insertion de coin alignés dans un logement (c) respectif et le crochet associé (22);
le procédé comprenant les opérations consistant à enfoncer chaque coin (3) dans ses trous (21a, 21b, 22a) d'insertion de coin pour modifier la position l'un par rapport à l'autre du crochet (22) et du logement (c) associés et donc amener le crochet (22) en engagement avec une partie sélectionnée de la surface interne de la paroi (11a) d'une des collerettes (11) d'un des éléments en colonne, tout en amenant également l'extrémité ouverte (e) du logement (c) en engagement avec la surface externe de l'élément en colonne (1);
caractérisé en ce que chaque crochet (22) peut glisser relativement au logement associé (c) et au corps principal (20) et est sollicité par un élément déformable élastiquement (23) respectif pour se déplacer d'une position rétractée à une position avancée, de manière que l'enfoncement du coin (3) associé dans ses trous (21a, 21b, 22a) d'insertion de coin amène le crochet (22) à se déplacer vers sa position rétractée.

2. Système de support comprenant :
une pluralité d'éléments en colonne (1) comprenant chacun une pluralité de collerettes (11) espacées longitudinalement ayant chacune une paroi s'étendant circonférentiellement (11a); et
une pluralité d'éléments de raccord (2) comprenant chacun un corps principal (20), une pluralité de sabots de jonction (21), chacun à une extrémité respective du corps principal (20), une pluralité de crochets (22), chacun disposé dans une extrémité ouverte (e) d'un logement (c) d'un sabot de jonction (21) respectif et une pluralité de coins (3) pouvant s'enfoncer chacun dans les trous (21a, 21b, 22a) d'insertion de coin alignés dans un logement (c) respectif et le crochet associé (22) pour modifier la position l'un par rapport à l'autre du logement (c) et du crochet (22), de manière que le crochet (22) puisse être amené en engagement avec une partie sélectionnée de la surface interne de la paroi (11a) d'une des collerettes (11) d'un des éléments en colonne, et que l'extrémité ouverte (e) du logement (c) puisse être amenée an engagement avec la surface externe de l'élément an colonne (1);
caractérisé an ce que chaque crochet (22) peut glisser relativement au logement associé (c) et au corps principal (20) et est sollicité par un élément déformable élastiquement (23) respectif pour se déplacer d'une position rétractée à une position avancée, de manière que l'enfoncement du coin (3) associé dans ses trous (21a, 21b, 22a) d'insertion de coin amène la crochet (22) à se déplacer vers sa position rétractée.

3. Système de support selon la revendication 2, dans lequel l'extrémité ouverte (e) de chaque logement (c) comprend une paire de corps de paroi opposés (a, b) définissant un creux entra eux et avec les trous (21a, 21b) d'insertion de coin du logement formés an leur sein.

4. Système de support selon la revendication 2 ou 3, dans lequel chaque collerette (11), y compris sa paroi (11a, 11b), a une section transversale généralement en forme de T ou de L.

5. Système de support selon l'une quelconque des revendications 2 à 4, dans lequel chaque crochet (22) comporte une portion d'extrémité (g, o, Q) avec une section transversale généralement en forme de T ou de L.

6. Système de support selon l'une quelconque des revendications 2 à 5, dans lequel chaque paroi (11a) comporte une pluralité de découpes (11c) espacées sur sa longueur, et chaque crochet (22) a une portion d'extrémité (o) pouvant être insérée dans l'une des découpas (11c) pour engager la surface interne de la paroi (11a) renfermant la découpe (11c).

7. Système de support salon l'une quelconque des revendications 2 à 6, dans lequel chaque élément an colonne (1) comprend en outre un corps principal allongé (10) qui est recouvert d'un couvercle protecteur (12) adjacent à chaque collerette (11) de l'élément an colonne, de manière à protéger le corps principal (10) lorsqu'un des logements (c) des éléments de raccord (2) vient en engagement avec l'élément an colonne (1).

8. Système de support selon la revendication 7, dans lequel les couvercles protecteurs (12) sont cylindriques et sont fixés aux surfaces périphériques externes des corps principaux (10), et les collerettes (11) sont fixées aux surfaces périphériques externes des couvercles protecteurs (12).

9. Système de support selon la revendication 2 ou 3, dans lequel chaque élément en colonne (1) comprend en outre (i) un corps principal allongé (10) sur lequel sont montés las collerettes (11) et (ii) une pluralité de pièces d'écartement (13) montées sur le corps principal (10) adjacentes aux collerettes (11), de manière que lorsque les éléments en colonne et les éléments de raccord (1, 2) sont reliés, les extrémités ouvertes (e) des logements (c) s'engagent avec les surfaces externes des pièces d'écartement (13) et des collerettes (11).

10. Système de support salon la revendication 2 ou 3, dans lequel las collerettes (11, 11') sont groupées an paires, avec les parois (11a) de chaque paire se faisant face pour définir entre elles une gorge an queue d'aronde (P,P'), de manière que tout crochet (22) puisse être engagé avec l'une des surfaces internes ou les deux surfaces internes des parois (11a) en étant inséré dans la gorge en queue d'aronde (P,P'), tourné puis rétracté.

11. Système de support selon la revendication 10, dans lequel les collerettes (11') de chaque paire de collerettes sont d'un seul tenant.

12. Système de support selon la revendication 10, dans lequel les collerettes (11) de chaque paire de collerettes sont distinctes.

13. Système de support selon l'une quelconque des revendications 10 à 12, dans lequel chaque crochet (22) comporte une portion d'extrémité (Q) sur un raccord rotatif (R), la portion d'extrémité (Q) ayant généralement une section transversale en forme de T ou de L.

14. Système de support selon l'une quelconque des revendications 2 à 13, dans lequel chaque coin (3) comporte une portion de butée (3c) à son extrémité la plus étroite pour empêcher que le coin (3) soit rétracté hors des trous (21a, 21b, 22a) d'insertion de coin.

15. Système de support selon l'une quelconque des revendications 2 à 14, dans lequel les éléments en colonne et les éléments de raccord (1, 2) sont reliés, avec les éléments de raccord (2) disposés horizontalement ou en diagonale et les éléments en colonne (1) disposés verticalement.

16. Système de support selon l'une quelconque des revendications 2 à 14, dans lequel las éléments en colonne et les éléments de raccord (1, 2) sont reliés pour former un système d'échafaudage préfabriqué.
